# EUROPÄISCHE PATENTSCHRIFT

(11) **EP 1 252 626 B1**
(45) Veröffentlichungstag und Bekanntmachung des Hinweises auf die Patenterteilung: **27.07.2005**
(21) Anmeldenummer: 00991528.1
(22) Anmeldetag: 19.12.2000
(51) Int. Cl.: G11B 20/00

(54) **ABSPIELGERÄT FÜR KOMPRIMIERTE AUDIODATEN**
PLAYBACK DEVICE FOR COMPRESSED AUDIO DATA
APPAREIL DE LECTURE POUR DES INFORMATIONS AUDIO COMPRIMEES

(30) Priorität: 21.12.1999 DE 19961593; 16.08.2000 DE 10039771
(43) Veröffentlichungstag der Anmeldung: 30.10.2002
(73) Patentinhaber: ROBERT BOSCH GMBH, 70442 Stuttgart (DE)
(72) Erfinder: WAGNER, Oliver, 31134 Hildesheim (DE); HATSCHER, Werner, 31079 Sibbesse (DE); DEBERTIN, Ansgar, 31188 Holle (DE)
(86) Internationale Anmeldenummer: PCT/DE2000/004517
(87) Internationale Veröffentlichungsnummer: WO 2001/046951

(56) Entgegenhaltungen:
- EP-A- 0 851 423
- EP-A- 0 999 549
- WO-A-97/22120
- WO-A-99/28910
- DE-A- 19 907 711
- DE-U- 29 619 764
- GB-A- 2 344 925
- US-A- 5 546 369
- PATENT ABSTRACTS OF JAPAN vol. 1997, no. 11, 28. November 1997 (1997-11-28) & JP 09 185868 A (VICTOR CO OF JAPAN LTD), 15. Juli 1997 (1997-07-15)
- PATENT ABSTRACTS OF JAPAN vol. 1996, no. 02, 29. Februar 1996 (1996-02-29) & JP 07 272402 A (VICTOR CO OF JAPAN LTD), 20. Oktober 1995 (1995-10-20)

## Beschreibung

Die Erfindung geht von einem Abspielgerät und von einem Speichermedium nach der Gattung des unabhängigen Anspruchs 1 aus.

Es sind bereits Speichermedien in Form von Audio-CD's (Compact Discs) bekannt, auf denen Audiodaten gespeichert sind. Es sind weiterhin Abspielgeräte in Form von Audio-CD-Spielern bekannt, die jeweils ein Laufwerk zum Abspielen von Audio-CD's und einen optischen Lesekopf zum Auslesen von auf einer in das Laufwerk eingeführten Audio-CD aufgezeichneten Audiodaten umfassen.

Die WO-A 99/28910 beschreibt ein Abspielgerät nach dem Oberbegriff des Anspruchs 1, mit einem Laufwerk für Speichermedien und einer Abtastvorrichtung zum Auslesen von Audiodaten von einem in das Laufwerk eingeführten Datenträger. Die Audiodaten sind auf dem Speichermedium in verschiedenen Formaten abgespeichert, wobei auch komprimierte Formate verwendet werden. Femer weist das Gerät eine Steuerung auf, welche anhand von ebenfalls auf dem Datenträger aufgezeichneten Datentypindikatoren die Daten auswählt und einer Dekompressionsvorrichtung zuführt. Diese nimmt im Fall von komprimierten Daten eine dem Datentyp entsprechende Dekompression vor. Es ist ferner ein Speicher zur Aufnahme der ausgelesenen komprimierten Daten vor ihrer Weiterleitung an die Dekompressionsvorrichtung vorhanden.

Das erfindungsgemäße Abspielgerät ist im Anspruch 1 definiert.

Durch die in den Unteransprüchen aufgeführten Maßnahmen sind vorteilhafte Weiterbildungen und Verbesserungen des im unabhängigen Anspruch 1 angegebenen Abspielgerätes möglich.

Besonders vorteilhaft ist es, daß die Steuerung die Art der Kompression der Audiodaten ermittelt und daß die Dekompressionsvorrichtung die Audiodaten in Abhängigkeit der ermittelten Kompressionsart dekomprimiert. Auf diese Weise läßt sich ein Abspielgerät für Speichermedien mit komprimierten Audiodaten realisieren, das für verschiedene Arten der Kompression der Audiodaten eine Dekompression anbietet und somit besonders vielseitig einsetzbar ist.

Ein weiterer Vorteil besteht darin, daß das Abspielgerät einen Speicher umfaßt, in dem die Steuerung die von der Abtastvorrichtung ausgelesenen und als komprimiert detektierten Audiodaten des Speichermediums vor ihrer Weiterleitung an die Dekompressionsvorrichtung abspeichert. Auf diese Weise kann eine Pufferung der ausgelesenen komprimierten Audiodaten erzielt werden, die notwendig ist, um eine Anpassung der pro Zeiteinheit vom Speichermedium ausgelesenen Audiodatenmenge an eine für die Weiterverarbeitung, beispielsweise für eine akustische Wiedergabe der Audiodaten, erforderliche Audiodatenmenge pro Zeiteinheit anzupassen.

Ein weiterer Vorteil besteht darin, daß die Steuerung bei Detektion komprimierter Audiodaten die Abtastvorrichtung veranlaßt, die Audiodaten portionsweise, insbesondere spurweise, vom Speichermedium auszulesen. Auf diese Weise wird ein Überlaufen des Speichers verhindert, da aufgrund der Komprimierung der Audiodaten die ausgelesene Audiodatenmenge pro Zeiteinheit größer als die für die Weiterverarbeitung der Audiodaten erforderliche Audiodatenmenge pro Zeiteinheit ist.

Ein weiterer Vorteil besteht darin, daß die Steuerung bei Detektion von nicht komprimierten Audiodaten des abgetasteten Speichermediums diese Audiodaten direkt oder über einen Digital-/Analog-Wandler einer Audio-Schnittstelle, insbesondere zur Weiterleitung an eine Wiedergabevorrichtung, zuführt. Auf diese Weise ist das Abspielgerät auch zur Wiedergabe von Speichermedien mit nicht komprimierten Audiodaten verwendbar und somit noch vielseitiger einsetzbar.

### Zeichnung

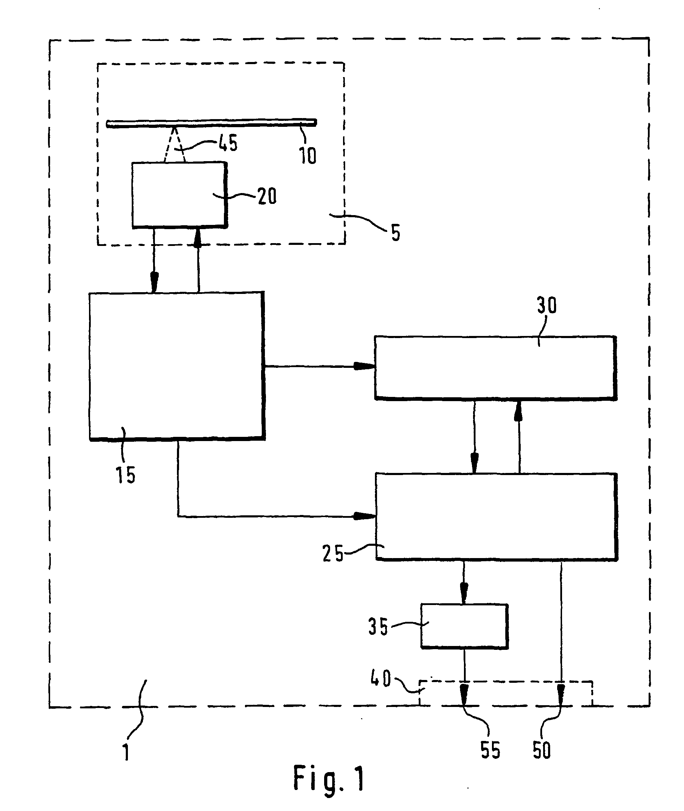

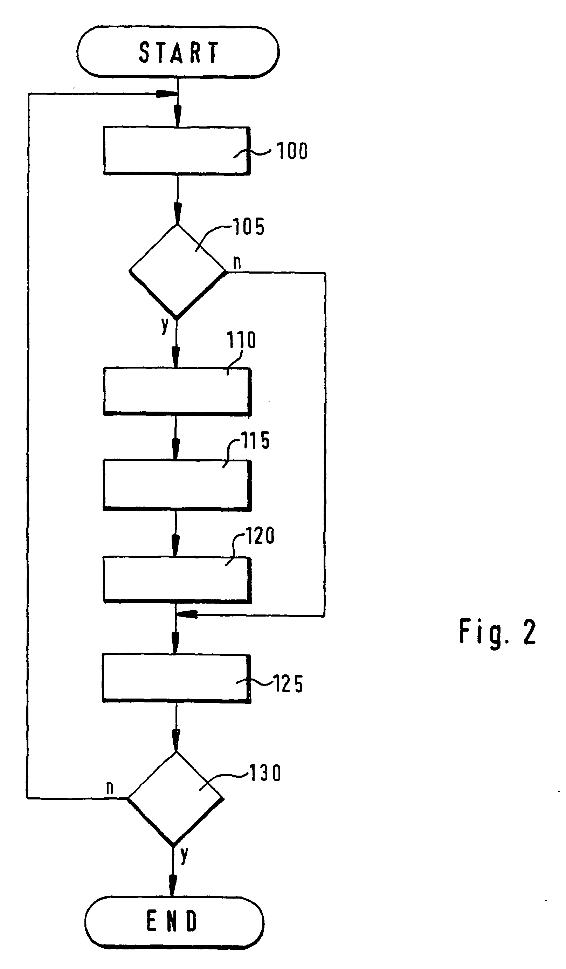

Ein Ausführungsbeispiel der Erfindung ist in der Zeichnung dargestellt und in der nachfolgenden Beschreibung näher erläutert. Es zeigen Figur 1 ein Blockschaltbild eines erfindungsgemäßen Abspielgerätes und Figur 2 einen Ablaufplan für eine Steuerung des erfindungsgemäßen Abspielgerätes.

### Beschreibung des Ausführungsbeispiels

In Figur 1 kennzeichnet 1 ein Abspielgerät zum Abspielen von Speichermedien 10 mit auf den Speichermedien 10 aufgezeichneten Audiodaten. Bei den Speichermedien 10 kann es sich dabei beispielsweise um optische und/oder magnetische Speichermedien handeln, bei denen die Audiodaten optisch und/oder magnetisch aufgezeichnet sind. Das Abspielgerät 1 umfaßt weiterhin ein Laufwerk 5, in das ein solches Speichermedium 10 einführbar ist. Das Laufwerk 5 umfaßt eine Abtastvorrichtung 20 zum Auslesen von auf dem in das Laufwerk 5 eingeführten Speichermedium 10 aufgezeichneten Audiodaten. Beim Laufwerk 5 kann es sich beispielsweise um ein optisches und/oder magnetisches Laufwerk handeln, je nach dem, ob die Audiodaten auf dem Speichermedium 10 optisch oder magnetisch gespeichert sind. Entsprechend erfolgt die Abtastung und das Auslesen der Audiodaten des Speichermediums 10 durch die Abtastvorrichtung 20 optisch oder magnetisch. Handelt es sich bei dem Laufwerk 5 um ein optisches Laufwerk mit optischer Abtastvorrichtung 20, so kann das Abspielgerät 1 beispielsweise als Audio-CD-Spieler zum Abspielen von als Audio-CD's ausgebildeten Speichermedien 10 realisiert sein. Handelt es sich bei dem Laufwerk 5 um ein magnetisches Laufwerk mit einer magnetischen Abtastvorrichtung 20, so kann das Abspielgerät 1 in diesem Fall beispielsweise als Kassettenrekorder zum Abspielen von als Audio-Kassetten ausgebildeten Speichermedien 10 ausgebildet sein. Bei diesen Audio-Kassetten kann es sich dabei um analoge oder digitale Aufzeichnungsträger handeln.

Im folgenden soll beispielhaft angenommen und beschrieben werden, daß das Abspielgerät 1 als Audio-CD-Spieler ausgebildet ist. Die Abtastvorrichtung 20 ist dann zum optischen Abtasten und Auslesen eines als Audio-CD ausgebildeten Speichermediums 10 mittels eines Laserstrahls 45 ausgebildet. Das Laufwerk 5 kann in diesem Fall dann als optisches Laufwerk bezeichnet werden. Auf der Audio-CD 10 sind die Audiodaten in Spuren konzentrisch zu einem Mittelpunkt der Audio-CD 10 abgelegt und werden mittels des Laserstrahls 45 von der Abtastvorrichtung 20 ausgelesen. Die auf diese Weise ausgelesenen Audiodaten werden einer Steuerung 15 zugeführt. Die Steuerung 15 wiederum steuert die Abtastvorrichtung 20 mit entsprechenden Steuerbefehlen an. Die Steuerung 15 ist außerdem mit einem Speicher 30 und einer Dekompressionsvorrichtung 25 verbunden. Der Speicher 30 und die Dekompressionsvorrichtung 25 sind ebenfalls miteinander verbunden. Die Dekompressionsvorrichtung 25 ist einerseits über einen Digital-/Analog-Wandler 35 und andererseits direkt mit einer Audio-Schnittstelle 40 des Abspielgerätes 1 verbunden, an die Schaltungen oder Geräte zur Weiterverarbeitung der aus der Audio-CD 10 ausgelesenen Audiodaten anschließbar sind. Dies kann beispielsweise eine akustische Wiedergabevorrichtung in Form einer oder mehrerer Verstärkerstufen und eines oder mehrerer daran angeschlossener Lautsprecher sein. Es kann jedoch auch vorgesehen sein, daß eine entsprechende Weiterverarbeitung der ausgelesenen Audiodaten im Audio-CD-Spieler 1 selbst erfolgt und daß diese Audiosignale beispielsweise an einer Wiedergabevorrichtung des Audio-CD-Spielers 1 wiedergegeben werden können.

Die Audio-Schnittstelle 40 umfaßt somit einen Digitalausgang 50, der direkt an die Dekompressionsvorrichtung 25 angeschlossen ist, und einen Analogausgang 55, der über den Digital-/Analog-Wandler 35 mit der Dekompressionsvorrichtung 25 verbunden ist. Die Dekompressionsvorrichtung 25 kann als digitaler Signalprozessor oder als ein Teil eines solchen digitalen Signalprozessors ausgebildet sein.

In Figur 2 ist ein Ablaufplan für die Funktionsweise der Steuerung 15 dargestellt. Bei einem Programmpunkt 100 werden digital auf der in das Laufwerk 5 eingeführten Audio-CD 10 abgespeicherte Audiodaten mittels des Laserstrahls 45 von der Abtastvorrichtung 20 ausgelesen und an die Steuerung 15 weitergeleitet. Anschließend wird zu einem Programmpunkt 105 verzweigt. Bei Programmpunkt 105 prüft die Steuerung 15, ob die ausgelesenen digitalen Audiodaten komprimiert sind. Ist dies der Fall, so wird zu einem Programmpunkt 110 verzweigt, andernfalls wird zu einem Programmpunkt 125 verzweigt. Auf der Audio-CD 10 können die Audiodaten nach mindestens einem Kompressionsverfahren komprimiert abgespeichert sein, beispielsweise nach dem MP3-Verfahren (MPEG Layer-3; MPEG = Motion Picture Expert Group). Auf diese Weise lassen sich bei unveränderter herkömmlicher Speicherdichte auf der Audio-CD 10 mehr Audiodaten abspeichern als ohne Kompression. Im MP3-Format lassen sich beispielsweise neun mal so viele Daten auf der Audio-CD 10 abspeichern als ohne Kompression. Die unterschiedlichen Kompressionsverfahren stellen dabei unterschiedliche Kompressionsarten dar. Bei Programmpunkt 110 ermittelt die Steuerung 15 die Art der Kompression der ausgelesenen Audiodaten und teilt diese Kompressionsart der Dekompressionsvorrichtung 25 zur Auswahl des für die Dekompression dieser Audiodaten geeigneten Dekompressionsalgorithmus mit. Im Falle der beispielhaft aufgeführten Kompression nach dem MP3-Verfahren kann dieses Verfahren entweder durch Auswertung des für die Kompression verwendeten Datenformates oder - erheblich einfacher - durch Auswertung des Suffixes des für die auf der Audio-CD 10 gespeicherten Daten verwendeten Dateinamens erfolgen. Dieses Suffix lautet im Fall der Kompression nach dem MP3-Verfahren beispielsweise "MP3". Der Dateiname kann zusätzlich an einer nicht dargestellten Anzeigevorrichtung des Audio-CD-Spielers 1 angezeigt werden und beispielsweise einen Musiktitel kennzeichnen. Jeder Musiktitel auf der Audio-CD 10 könnte dabei in Dateiform mit entsprechendem Dateinamen abgespeichert sein. Anschließend wird zu einem Programmpunkt 115 verzweigt, bei dem die Steuerung 15 die Abtastvorrichtung 20 derart ansteuert, daß sie eine vorgegebene Audiodatenmenge aus der Audio-CD 10 ausliest, wobei die ausgelesenen Audiodaten dann im Speicher 30 zwischengespeichert werden. Dabei kann es beispielsweise vorgesehen sein, daß die Steuerung 15 die Abtastvorrichtung 20 derart ansteuert, daß sie sämtliche Audiodaten einer Datenspur der Audio-CD 10 ausliest und daß diese ausgelesenen Audiodaten im Speicher 30 anschließend zwischengespeichert werden. Anschließend wird zu einem Programmpunkt 120 verzweigt, bei dem die Dekompressionsvorrichtung 25 sukzessive die im Speicher 30 gespeicherten Audiodaten durch entsprechende Speicheradressierung anfordert, woraufhin die adressierten Audiodaten vom Speicher 30 in die Dekompressionsvorrichtung 25 übertragen und dort mittels des ausgewählten Dekompressionsalgorithmus dekomprimiert werden. Anschließend wird zu einem Programmpunkt 125 verzweigt. Bei Programmpunkt 125 gibt die Dekompressionsvorrichtung 25 die dekomprimierten Audiodaten einerseits an den Digital-/Analog-Wandler 35 und andererseits direkt an den Digitalausgang 50 der Audioschnittstelle 40 ab. Der Digital-/Analog-Wandler 35 wandelt die digitalen dekomprimierten Audiodaten in analoge Audiodaten um und gibt sie an den Analogausgang 55 der Audioschnittstelle 40 ab. Für den Fall, daß bei Programmpunkt 105 von der Steuerung 15 festgestellt wurde, daß die ausgelesenen Audiodaten nicht komprimiert sind, werden die ausgelesenen Audiodaten von der Steuerung 15 durch die Dekompressionsvorrichtung 25 transparent durchgereicht, d.h. es wird kein Dekompressionsalgorithmus für die Dekompressionvorrichtung 25 ausgewählt, so daß die ausgelesenen Audiodaten entweder direkt und in digitaler Form an den Digitalausgang 50 oder nach Digital-/Analog-Wandlung durch den Digital-/Analog-Wandler 35 in analoger Form an den Analogausgang 55 bei Programmpunkt 125 abgegeben werden. Anschließend wird zu einem Programmpunkt 130 verzweigt. Bei Programmpunkt 130 prüft die Steuerung 15, ob bereits alle auszulesenden Audiodaten von der Audio-CD 10 ausgelesen wurden. Ist dies der Fall, so wird das Programm verlassen, andernfalls wird zu Programmpunkt 100 zurückverzweigt.

Bei Programmpunkt 130 prüft die Steuerung 15 für den Fall, daß die Audiodaten komprimiert auf der Audio-CD 10 abgespeichert sind, ob bereits sämtliche im Speicher 30 gespeicherten Audiodaten von der Dekompressionsvorrichtung 25 dekomprimiert und an die Audioschnittstelle 40 weitergeleitet wurden. Die Steuerung 15 veranlaßt die Abtastvorrichtung 20 zum Auslesen einer neuen Audiodatenmenge aus der Audio-CD 10, beispielsweise einer neuen Datenspur, und deren Weiterleiten in den Speicher 30 erst dann, wenn die zuvor im Speicher 30 gespeicherten Audiodaten vollständig durch die Dekompressionsvorrichtung 25 dekomprimiert und an die Audioschnittstelle 40 weitergeleitet wurden. Auf diese Weise wird ein Datenverlust durch Überschreiben von noch nicht dekomprimierten Audiodaten im Speicher 30 verhindert. Somit gibt die Steuerung 15 in Abhängigkeit des Verarbeitungsstandes der gerade im Speicher 30 gespeicherten Audiodaten die Zeitpunkte für das erneute Auslesen einer Audiodatenmenge aus der Audio-CD 10 im Falle von auf der Audio-CD 10 gespeicherten komprimierten Audiodaten vor. Im herkömmlichen Fall von auf der Audio-CD 10 gespeicherten nicht komprimierten Audiodaten ist hingegen kein portionsweises Auslesen der auf der Audio-CD 10 gespeicherten Audiodaten erforderlich, da auch keine Zwischenspeicherung dieser Audiodaten im Speicher 30 und keine Dekompression in der Dekompressionsvorrichtung 25 erforderlich ist, so daß solche nicht komprimierten Audiodaten kontinuierlich von der Abtastvorrichtung 20 ausgelesen und in der beschriebenen Weise an die Audioschnittstelle 40 weitergeleitet werden können.

Auf der Audio-CD 10 können Audiodaten nach verschiedenen Kompressionsverfahren komprimiert abgespeichert sein. Die verwendeten Kompressionsarten können dabei in einem Einlaufbereich der Audio-CD 10 angegeben und dort initial vor Beginn des Auslesens der Audiodaten von der Steuerung 15 erfaßt werden. Dabei kann auch angegeben sein, in welchen Datenspuren der Audio-CD 10 die Audiodaten nach welchem Kompressionsalgorithmus oder Kompressions-Verfahren komprimiert sind. Dabei kann es auch vorgesehen sein, daß auf der Audio-CD 10 sowohl Datenspuren oder Datenbereiche mit komprimierten Audiodaten als auch solche mit nicht komprimierten Audiodaten vorgesehen sind. Die nicht komprimierten Audiodaten werden dabei wie beschrieben transparent durch die Dekompressionsvorrichtung 25 an die Audioschnittstelle 40 weitergeleitet. Die Audiodatenmenge der im Speicher 30 zu speichernden komprimierten Audiodaten kann von der Steuerung 15 so gewählt werden, daß die entsprechenden Audiodaten alle nach demselben Kompressionsverfahren komprimiert sind. Die Dekompressionsvorrichtung 25 kann dann für die Dekompression sämtlicher im Speicher 30 gespeicherter Audiodaten denselben Dekompressionsalgorhitmus oder dasselbe Dekompressionsverfahren verwenden. Bei der Speicherung von Audiodaten im Speicher 30, die nach verschiedenen Kompressionsverfahren komprimiert sind, muß die Steuerung 15 die Dekompressionsvorrichtung 25 derart ansteuern, daß sie die im Speicher 30 abgespeicherten Audiodaten jeweils mit dem richtigen Dekompressionsverfahren dekomprimiert. Da die Steuerung 15 die Datenbereiche der Audio-CD 10 kennt, in denen die Audiodaten mit den verschiedenen Kompressionsverfahren gespeichert sind, kann sie die Audiodaten einer von der Abtastvorrichtung 20 auszulesenden Audiodatenmenge in Abhängigkeit der verwendeten Kompressionsverfahren in unterschiedlich adressierten Speicherbereichen des Speichers 30 ablegen und die Dekompressionsvorrichtung 25 über die Zuordnung der zu verwendenden Dekompressionsverfahren zu diesen Speicherbereichen des Speichers 30 informieren, damit die Dekompressionsvorrichtung 25 die in den verschiedenen Speicherbereichen des Speichers 30 abgelegten Audiodaten mit dem entsprechend zugeordneten Dekompressionsalgorithmus dekomprimieren kann.

Am Digitalausgang 50 und am Analogausgang 55 ist schließlich nicht mehr bekannt, nach welchem Kompressionsverfahren die dort abgegebenen Audiodaten komprimiert, ja ob die Audiodaten überhaupt komprimiert auf der Audio-CD 10 vorliegen.

## Patentansprüche

1. Abspielgerät (1) mit einem Laufwerk (5) für Speichermedien (10) und einer Abtastvorrichtung (20) zum Auslesen von auf einem in das Laufwerk (5) eingeführten Speichermedium (10) aufgezeichneten Audiodaten, mit einer Steuerung (15) mit Mitteln zum Pröfen ob die ausgelesenen Audiodaten komprimiert sind und zum Ermitteln der Art der Kompression der Audiodaten, mit einer Dekompressionsvorrichtung (25) zur Dekomprimierung von komprimierten Audiodaten, mit einem Speicher (30) zur Abspeicherung der von der Abtastvorrichtung (20) ausgelesenen und als komprimiert detektierten Audiodaten des Speichermediums (10) durch die Steuerung (15) vor deren Weiterleitung an die Dekompressionsvorrichtung (25), **dadurch gekennzeichnet, dass** die Steuerung (15) Mittelaufweist, zum Ablegen der ausgelesenen Audiodatenmenge in Abhängigkeit der verwendeten Kompressionsverfahren in unterschiedlich adressierte Speicherbereiche des Speichers (30) und zum Informieren der Dekompressionsvorrichtung (25) über die Zuordnung der zu verwendenden Dekompressionsverfahren zu diesen Speicherbereichen des Speichers (30), wobei die Dekompressionsvorrichtung Mittel aufweist, die im Speicherabgelegten Daten mit den entsprechenden, den Speicherbereichen zugeordneten Dekompressionsverfahren zu dekomprimieren.

2. Abspielgerät (1) nach Anspruch 1, **dadurch gekennzeichnet, daß** die Steuerung (15) eingerichtet ist, die Art der Kompression der Audiodaten zu ermitteln und daß die Dekompressionsvorrichtung (25) eingerichtet ist, die Audiodaten in Abhängigkeit der ermittelten Kompressionsart zu dekomprimieren.

3. Abspielgerät (1) nach Anspruch 1 oder 2, **dadurch gekennzeichnet, daß** die Steuerung (15) eingerichtet ist, bei Detektion komprimierter Audiodaten die Abtastvorrichtung (20) zu veranlassen, die Audiodaten portionsweise, insbesondere spurweise, vom Speichermedium (10) auszulesen.

4. Abspielgerät (1) nach Anspruch 3, **dadurch gekennzeichnet, daß** die Steuerung (15) eingerichtet ist, der Abtastvorrichtung (20) die Zeitpunkte zum portionsweisen Auslesen vorzugeben.

5. Abspielgerät (1) nach einem der vorherigen Ansprüche, **dadurch gekennzeichnet, daß** die Steuerung (15) eingerichtet ist, die dekomprimierten Audiodaten direkt oder über einen Digital-/Analog-Wandler (35) einer Audio-Schnittstelle (40), insbesondere zur Weiterleitung an eine Wiedergabevorrichtung, zuzuführen.

6. Abspielgerät (1) nach einem der vorherigen Ansprüche, **dadurch gekennzeichnet, daß** die Steuerung (15) eingerichtet ist, bei Detektion von nicht komprimierten Audiodaten des abgetasteten Speichermediums (10) diese Audiodaten direkt oder über einen Digital-/Analog-Wandler (35) einer Audio-Schnittstelle(40), insbesondere zur Weiterleitung an eine Wiedergabevorrichtung, zuzuführen.

7. Abspielgerät (1) nach einem der vorherigen Ansprüche, **dadurch gekennzeichnet, daß** die Dekompressionsvorrichtung (25) als digitaler Signalprozessor ausgebildet ist.

## Claims

1. Player (1) having a drive (5) for storage media (10) and having a scanning apparatus (20) for reading audio data recorded on a storage medium (10) which has been inserted into the drive (5), having a controller (15) having means for checking whether the audio data which are read are compressed and for ascertaining the type of compression of the audio data, having a decompression apparatus (25) for decompressing compressed audio data, having a memory (30) for the controller (15) to store the audio data on the storage medium (10) which are read by the scanning apparatus (20) and which are detected as compressed before they are forwarded to the decompression apparatus (25), **characterized in that** the controller (15) has means for storing the volume of audio data which has been read in differently addressed memory areas of the memory (30) depending on the compression method used and for informing the decompression apparatus (25) about the association between the decompression methods which are to be used and these memory areas of the memory (30), the decompression apparatus having means for decompressing the data stored in the memory using the corresponding decompression methods associated with the memory areas.

2. Player (1) according to Claim 1, **characterized in that** the controller (15) is set up to ascertain the type of compression of the audio data, and **in that** the decompression apparatus (25) is set up to decompress the audio data on the basis of the ascertained compression type.

3. Player (1) according to Claim 1 or 2, **characterized in that** the controller (15) is set up so that, upon detecting compressed audio data, it prompts the scanning apparatus (20) to read the audio data from the storage medium (10) portion by portion, particularly track by track.

4. Player (1) according to Claim 3, **characterized in that** the controller (15) is set up to prescribe for the scanning apparatus (20) the times for the portion-by-portion reading.

5. Player (1) according to one of the preceding claims, **characterized in that** the controller (15) is set up to supply the decompressed audio data to an audio interface (40) directly or via a digital/analogue converter (35), particularly for the purpose of forwarding to a reproduction apparatus.

6. Player (1) according to one of the preceding claims, **characterized in that** the controller (15) is set up so that, upon detecting uncompressed audio data on the scanned storage medium (10), it supplies these audio data to an audio interface (40) directly or via a digital/analogue converter (35), particularly for the purpose of forwarding to a reproduction apparatus.

7. Player (1) according to one of the preceding claims, **characterized in that** the decompression apparatus (25) is in the form of a digital signal processor.

## Revendications

1. Appareil de lecture (1) comprenant un lecteur (5) pour des supports de stockage (10) et un dispositif de balayage (20) permettant de lire des données audio enregistrées sur un support de stockage (10) introduit dans le lecteur (5), une commande (15) dotée de moyens permettant de vérifier si les données audio lues sont compressées et permettant de déterminer le type de compression des données audio, un dispositif de décompression (25) pour décompresser les données audio compressées, une mémoire (30) permettant le stockage, par la commande (15), des données audio du support de stockage (10) lues par le dispositif de balayage (20) et détectées comme étant compressées, avant leur transmission au dispositif de décompression (25),
**caractérisé en ce que**
la commande (15) présente des moyens pour enregistrer la quantité de données audio lue, en fonction des procédés de compression utilisés, dans des zones de mémorisation de la mémoire (30) ayant une adresse différente, et pour indiquer au dispositif de décompression (25) l'association entre les procédés de décompression à utiliser et ces zones de mémorisation de la mémoire (30), le dispositif de décompression présentant des moyens pour décompresser les données enregistrées dans la mémoire avec les procédés de décompression appropriés correspondant aux zones de mémorisation.

2. Appareil de lecture (1) selon la revendication 1,
**caractérisé en ce que**
la commande (15) est conçue pour déterminer le type de compression des données audio, et le dispositif de décompression (25) est conçu pour décompresser les données audio en fonction du type de compression déterminé.

3. Appareil de lecture (1) selon la revendication 1 ou 2,
**caractérisé en ce que**
lors de la détection de données audio compressées, la commande (15) est conçue pour permettre au dispositif de balayage (20) de lire les données audio par portions, en particulier par pistes, à partir du support de stockage (10).

4. Appareil de lecture (1) selon la revendication 3,
**caractérisé en ce que**
la commande (15) est conçue pour communiquer à l'avance au dispositif de balayage (20) les moments de la lecture par portions.

5. Appareil de lecture (1) selon l'une quelconque des revendications précédentes,
**caractérisé en ce que**
la commande (15) est conçue pour envoyer les données audio compressées directement ou par le biais d'un convertisseur numérique/analogique (35) à une interface audio (40), en particulier pour la transmission à un dispositif de restitution.

6. Appareil de lecture (1) selon l'une quelconque des revendications précédentes,
**caractérisé en ce que**
lors de la détection de données audio non compressées du support de stockage balayé (10), la commande (15) est conçue pour envoyer ces données audio directement ou par le biais d'un convertisseur numérique/analogique (35) à une interface audio (40), en particulier pour la transmission à un dispositif de restitution.

7. Appareil de lecture (1) selon l'une quelconque des revendications précédentes,
**caractérisé en ce que**
le dispositif de décompression (25) est configuré sous forme de processeur de signaux numériques.
